# EUROPÄISCHE PATENTANMELDUNG

(11) **EP 2 727 885 A1**
(43) Veröffentlichungstag der Anmeldung: **07.05.2014**
(21) Anmeldenummer: 12007438.0
(22) Anmeldetag: 30.10.2012
(51) Int. Cl.: C02F 1/28, C02F 1/00, B01D 15/00, B01D 37/02

(54) **Reinigung von mit organischen Spurenstoffen verunreinigtem Abwasser**

(71) Anmelder: BSH Umweltservice AG, 6210 Sursee (CH)
(72) Erfinder: Schlumberger, Stefan, 6210 Sursee (CH); Schöpf, André, 6210 Sursee (CH)
(74) Vertreter: Schaad, Balass, Menzl & Partner AG

(57) **Zusammenfassung**

Die vorliegende Erfindung betrifft ein Verfahren zur Reinigung von mit organischen Spurenstoffen verunreinigtem Abwasser. Dabei wird a) das Abwasser (5) in einem Reaktionsbehälter (10) mit Aktivkohle (20) versetzt, und anschliessend b) die Aktivkohle und die organischen Spurenstoffe vom Abwasser entfernt. Das Aktivkohle enthaltende Abwasser wird durch einen rohrförmigen, wasserdurchlässigen Trägerkörper (50), auf dessen Mantelfläche ein Filterschlauch (60) angeordnet ist, filtriert, wobei die Aktivkohle auf dem Filterschlauch (60) einen Filterkuchen (75) bildet, der die Reinigung des Abwassers von den organischen Spurenstoffen bewirkt. Vorzugsweise ist der rohrförmige, wasserdurchlässige Trägerkörper (50) ein Kerzenfilter.

## Beschreibung

Die vorliegende Erfindung betrifft ein Verfahren zur Reinigung von mit organischen Spurenstoffen verunreinigtem Abwasser.

Ein noch nicht endgültig gelöstes Problem in Abwasserreinigungsanlagen ist die Elimination von organischen Spurenstoffen wie Medikamenten, Hormonen etc. Durch den negativen Einfluss dieser Spurenstoffe auf unser Ökosystem, wie beispielsweise die zunehmende Fortpflanzungsschwäche vieler Fische, besteht ein hoher Druck, diese Spurenstoffe so weit wie möglich aus dem Abwasser zu entfernen.

Es ist bisher nicht gelungen, diese organischen Spurenstoffe durch konventionelle Filtersysteme, wie beispielsweise Membranfilter, zu entfernen, da die Spurenstoffe schon nach kurzer Zeit die Poren der Filter verstopfen.

DE 10 2006 001 955 beschreibt ein Verfahren zur Reinigung von mit organischen Spurenstoffen kontaminiertem Abwasser mittels katalytischer Nassoxidation mit Wasserstoffperoxid. Dabei handelt es sich um ein relativ energieintensives Verfahren zur Reinigung, da das Abwasser für eine Dauer von 20 bis 300 Minuten auf eine erhöhte Temperatur gebracht werden muss.

Alternativ dazu wurde gefunden, dass Spurenstoffe eliminiert werden können, wenn dem Abwasser Pulveraktivkohle zugegeben wird. In Sindelfingen (Deutschland) ist eine Anlage realisiert worden, in der das mit Pulveraktivkohle beladene Abwasser mit Flockungsmittel versetzt, und anschliessend einem grossen Sedimentationsbecken zugeführt wird. Dabei setzt sich die Pulveraktivkohle, welche die organischen Spurenstoffe adsorbiert hat, im Sedimentationsbecken ab. Der Klarlauf wird über eine Sandfilteranlage geleitet und mit einem Anteil von ca. 5 mg / Liter ungelöster Stoffe in den Vorfluter überführt. Diese ungelösten Stoffe bestehen zum Teil jedoch gerade aus der Pulveraktivkohle, welche die organischen Spurenstoffe in hoch konzentrierter Form beinhaltet.

Aufgabe der vorliegenden Erfindung ist es demnach, ein Verfahren bereitzustellen, mit dem die organischen Spurenstoffe effizient und ohne grossen apparativen oder energetischen Aufwand in kurzer Zeit entfernt werden können.

Die Aufgabe wird durch das Verfahren gemäss Anspruch 1 gelöst. Weitere bevorzugte Ausführungsformen sind Gegenstand der abhängigen Ansprüche.

Erfindungsgemäss wird das mit organischen Spurenstoffen verunreinigte Abwasser wie folgt gereinigt: In einem ersten Schritt wird das Abwasser in einem Reaktionsbehälter mit Aktivkohle versetzt. In einem zweiten Schritt wird die Aktivkohle mit den organischen Spurenstoffen vom Abwasser entfernt. Dies wird bewerkstelligt, in dem das die Aktivkohle enthaltende Abwasser durch einen rohrförmigen, wasserdurchlässigen Trägerkörper, auf dessen Mantelfläche ein Filterschlauch angeordnet ist, filtriert wird, wobei die Aktivkohle auf dem Filterschlauch einen Filterkuchen bildet, der die Reinigung des Abwassers von den organischen Spurenstoffen bewirkt. Das bedeutet, dass die Spurenstoffe entweder bereits im Reaktionsbehälter von der Aktivkohle adsorbiert wurden und nun durch die Abtrennung der Aktivkohle durch den Filterschlauch im Filterkuchen zurückbleiben, oder aber während der Filtration durch die den Filterkuchen ausbildende Aktivkohle noch adsorbiert werden. Besonders bevorzugt ist der rohrförmige, wasserdurchlässige Trägerkörper ein Kerzenfilter.

Durch das erfindungsgemässe Verfahren ist es überraschenderweise gelungen, mit einer bautechnisch einfachen Lösung eine ausserordentlich effiziente Filtration zu erreichen. Es konnte gezeigt werden, dass mit dem erfindungsgemässen Verfahren weniger als 1 mg ungelöster Stoffe pro Liter Abwasser in den Vorfluter überführt werden. Dadurch wird der Vorfluter deutlich weniger belastet, was positive Auswirkungen auf das gesamte Ökosystem hat.

Durch das erfindungsgemässe Verfahren wird zwangsläufig das gesamte Abwasser filtriert, da das die Aktivkohle enthaltende Abwasser den rohrförmigen, wasserdurchlässigen Trägerkörper, auf dessen Mantelfläche ein Filterschlauch angeordnet ist, von aussen nach innen durchströmt. Das sich im Innenraum des Trägerkörpers befindliche, gereinigte Abwasser fliesst anschliessend ab, das heisst, das Abwasser muss zwangsläufig filtriert werden, bevor es das Filtrationselement verlassen kann.

Eine Sedimentation der Feststoffe durch Zugabe von Betriebsmitteln oder anderen Chemikalien entfällt. Zum einen ist dies natürlich ökologisch erwünscht, zum anderen ist der Zusatz von Betriebsmitteln oder Chemikalien immer mit entsprechenden Kosten verbunden, was bei der heutigen Abwassermenge möglichst vermieden wird. Des Weiteren entfällt das zur Sedimentation benötigte Sedimentationsbecken, was eine deutliche Platz- und Kostenersparnis zur Folge hat. Viele Abwasserreinigungsanlagen haben grosse Platzprobleme, so dass die nachträgliche Erstellung eines Sedimentationsbeckens kaum möglich ist. Mithin lässt sich mit dem erfindungsgemässen Verfahren nicht nur die Konzentration der ungelösten Stoffe gegenüber dem Stand der Technik massiv senken, das Verfahren bietet auch die Möglichkeit, dass bestehende Abwasserreinigungsanlagen problemlos umgerüstet werden können.

Nachfolgend wird das erfindungsgemässe Verfahren im Detail beschrieben:

Das in den verschiedenen Abwasserreinigungsstufen gereinigte Abwasser wird nach dem Nachklärbecken in einen Reaktionsbehälter geleitet. Der Reaktionsbehälter wird mit geeigneten Mitteln gerührt oder umgewälzt. Vorzugsweise wird dies mit einer Rührvorrichtung bewerkstelligt. Dem Reaktionsbehälter wird über eine Dosiereinheit Aktivkohle zugegeben, die mit dem Wasser während einer bestimmten Verweilzeit durchmischt wird. Dabei kann es sich um frische Aktivkohle oder um rückgeführte Aktivkohle handeln, das heisst, um Aktivkohle, die bereits einen oder mehrere Filtrationszyklen durchlaufen hat. Das Abwasser im Reaktionsbehälter braucht nicht erwärmt zu werden, selbst im Winter kann bei Umgebungstemperatur gearbeitet werden.

Um eine optimale Durchmischung und damit Adsorption der organischen Spurenstoffe an die Aktivkohle zu erreichen, hat in einer bevorzugten Ausführungsform das Abwasser in dem Reaktionsbehälter eine Verweilzeit von 5 bis 30 Minuten, vorzugsweise 10 bis 20 Minuten. Durch den intensiven Kontakt von Abwasser und Aktivkohle werden die Spurenstoffe von der Aktivkohle adsorbiert.

In einer weiteren Ausführungsform weist der Reaktionsbehälter eine Aktivkohlekonzentration von 1 bis 20 g pro Liter Abwasser, vorzugsweise 2 bis 10 g pro Liter Abwasser auf. Je nach Bedarf kann zusätzlich frische oder rückgeführte Aktivkohle in den Reaktionsbehälter gegeben werden, wenn das Abwasser stärker belastet ist. Die Konzentration der Aktivkohle im Reaktionsbehälter lässt sich einfach über eine Trübungsmessung nach ISO 7027 bestimmen.

Anschliessend wird das die Aktivkohle enthaltende Abwasser in die Filtrationseinheit gepumpt. Die Aktivkohle hat dabei bereits einen Grossteil, d.h. 70 bis 80%, der organischen Spurenstoffe adsorbiert.

Die Filtrationseinheit besteht aus einem oder mehreren Filterelementen. Ein Filterelement ist ein Gehäuse, in dessen Innenraum ein oder mehrere rohrförmige, wasserdurchlässige Trägerkörper angebracht sind. Der Trägerkörper umschliesst einen im Wesentlichen zylindrischen Innenraum. An der dem Innenraum abgewandten äusseren Mantelfläche des rohrförmigen Trägerkörpers, d.h. an der Zylinderaussenfläche, ist ein Filterschlauch angebracht, der sich an der Aussenseite des Trägerkörpers abstützen kann. Im Kontext dieser Erfindung wird unter dem Ausdruck Filterschlauch auch ein einseitig geschlossener Filterschlauch, das heisst ein Filterstrumpf, verstanden.

Der Trägerkörper ist vorzugsweise an einem Ende geschlossen, das heisst, der Trägerfuss ist wasserundurchlässig. In dieser Ausführungsform kann der Filterschlauch an beiden Enden offen sein.

Alternativ kann der Trägerfuss auch wasserdurchlässig ausgestaltet sein, dann muss jedoch zwingend der Filterschlauch einseitig geschlossen sein, das heisst er muss in Form eines Filterstrumpfs vorliegen, um sicher zu stellen, dass kein aktivkohlehaltiges Wasser in den Innenraum des Trägerkörpers gelangen kann.

Das Material des Trägerkörpers ist ausgewählt aus der Gruppe bestehend aus rostfreiem Stahl, Polypropylen, Teflon, Polyethylenterephthalat oder Polyethylen.

In beiden Ausführungsformen umschliesst der Filterschlauch den wasserdurchlässigen Teil des Trägerkörpers vollflächig.

Wenn nun das die Aktivkohle enthaltende Abwasser in das Filterelement gepumpt wird, bildet die Aktivkohle auf dem Filterschlauch einen Filterkuchen, der die eigentliche Filtration des Abwassers bewirkt. Im Gegensatz zu der reinen Aktivkohlen-Adsorption der organischen Spurenstoffe in einem gerührten Behälter, wird durch das erfindungsgemässe Verfahren durch die zusätzlich geschaffene, reaktive Fläche mittels Filterkuchen eine Effizienzsteigerung erreicht. Das gesamte Abwasser mit den organischen Spurenstoffen wird zwangsweise in Kontakt mit der Aktivkohle in dem Filterkuchen gebracht. Da bei der Adsorption der Spurenstoffe immer die umgebende Diffusionsbarriere der Aktivkohle-Teilchen überwunden werden muss, führt der Aufbau eines filtrierenden Aktivkohlefilterkuchens auf dem Filterschlauch und der zwangsgeführten Strömung zu einer Verringerung dieser Diffusionsschicht, und es kann somit ein besserer Stoffaustausch erfolgen. Der Filterkuchen schützt zusätzlich den Filterschlauch, sodass dessen Poren nicht verstopft werden können.

Der Filtrationsschritt des erfindungsgemässen Verfahrens lässt sich sehr einfach mittels einer Trübungsmessung überwachen.

Nach einer gewissen Filtrationszeit wird der Abwasserzufluss vor dem Filtrationselement unterbrochen und der auf dem Filterschlauch gebildete Filterkuchen wird vom Innenraum des Trägerkörpers mittels Wasser, vorzugsweise im Wesentlichen reines Wasser, oder Luft entfernt. Vorzugsweise wird der Filterkuchen mittels Luft entfernt, da so eine Verschmutzung des Filterschlauchs von Innen vermieden werden kann. Der so vom Filterschlauch abgetrennte Filterkuchen sedimentiert in dem Filterkonus, wird danach aufgeschlämmt und als eingedickter Aktivkohleschlamm zurück in den Reaktionsbehälter geschleust. Die eingesetzte Aktivkohle wird so mehrere Male im Kreis über den Reaktionsbehälter geführt. Dies gewährleistet eine optimale Ausnützung der Aktivkohle. Nach einigen Filtrationszyklen wird der Aktivkohleschlamm nicht mehr in den Reaktionsbehälter eingeschleust, sondern in die biologische Stufe der Kläranlage geleitet und mit dem Klärschlamm entsorgt, da die Aktivkohle gesättigt oder zumindest nicht mehr ausreichend wirksam ist.

In einer besonders bevorzugten Ausführungsform der Erfindung ist der rohrförmige, wasserdurchlässige Trägerkörper ein Kerzenfilter. Dabei kann es sich um einen Standardkerzenfilter handeln, insbesondere um einen Kerzenfilter der üblicherweise in Abfallverbrennungsanlagen verwendet wird. Eine solche Filterkerze weist normalerweise einen im Wesentlichen zylindrischen Trägerkörper auf, der einen im Wesentlichen zylindrischen Filterkerzeninnenraum umschliesst. Auf der Oberfläche der Mantelfläche des Trägerkörpers ist ein Filterschlauch angeordnet, der im Wesentlichen als Trägermaterial für die Aktivkohle dient. Die Aktivkohle, die auf dem Filterschlauch einen Filterkuchen bildet, ist das eigentliche Filtrationsmedium.

Der Filterschlauch muss wasserdurchlässig sein und weist daher Poren auf, die sicherstellen, dass das Abwasser den Filterschlauch durchdringen kann.

Das Material des Filterschlauchs ist vorzugsweise ausgewählt aus der Gruppe von Polypropylen, Polyethylenterephthalat, Polyamid, Baumwolle, Glasfaser, Teflon oder Mischungen davon, wobei Polypropylen und Teflon besonders bevorzugt sind. Der Filterschlauch hat in einer bevorzugten Ausführungsform regelmässig verteilte Poren mit einer Porengrösse von 3 bis 10 µm, sodass die Aktivkohle den Filterschlauch nicht durchdringen kann. Das Abwasser kann jedoch problemlos durch die Poren hindurchdringen, ohne dass ein grosser Filterdruck aufgebaut wird. Der Filterdruck wird durch die Schichtdicke des Filterkuchens und der Machart des Filtertuches bestimmt.

In einer besonders bevorzugten Ausführungsform ist die verwendete Aktivkohle pulverförmig. In der gesamten Beschreibung der vorliegenden Erfindung kann in einer bevorzugten Ausführungsform unter dem Ausdruck Aktivkohle pulverförmige Aktivkohle verstanden werden. Die pulverförmige Aktivkohle ist besonders effizient, da die organischen Substanzen aufgrund der grossen Oberfläche schnell adsorbiert werden. Die pulverförmige Aktivkohle weist vorzugsweise eine durchschnittliche Partikelgrösse von 1 bis 500 µm, besonders bevorzugt von 45 µm, und eine spezifische Oberfläche von 5 bis 1 '600 m²/g, besonders bevorzugt von grösser 1000 m²/g, auf.

In einer besonders bevorzugten Ausführungsform ist die Aktivkohle Pulsorb WP 270, Aktivkohle von WASCOSORB oder ähnliche.

Das erfindungsgemässe Verfahren kann kontinuierlich oder chargenweise durchgeführt werden. Das kontinuierliche Verfahren hat den Vorteil, dass geringe Wartezeiten entstehen, da ständig Aktivkohle enthaltendes Wasser der Filtrationseinheit zugeführt wird. Das chargenweise durchgeführte Verfahren hat den Vorteil, dass die Verweildauer des Wassers im Reaktionsbehälter genau kontrolliert werden kann und damit eine höhere Sicherheit, dass möglichst alle Spurenstoffe von der Aktivkohle adsorbiert werden, erreicht wird. In einer besonders bevorzugten Ausführungsform umfasst die Anlage zwei oder mehrere, besonders bevorzugt zwei bis vier, Reaktionsbehälter. Hierbei kann das Verfahren chargenweise geführt werden, jedoch können so die Wartezeiten entsprechend verkürzt werden, da während der Verweilzeit des einen Reaktionsbeckens, das Abwasser aus dem anderen Reaktionsbecken ausgetragen werden kann. Es ist auch möglich, ein kontinuierliches Verfahren mit zwei oder mehr, vorzugsweise zwei bis vier Reaktionsbehältern zu führen, und die Abfliessgeschwindigkeit aus den Reaktionsbehältern zu reduzieren, dass die Verweildauer erhöht werden kann.

Grundsätzlich ist es möglich, das erfindungsgemässe Verfahren bereits vor der chemischen Reinigung durchzuführen. Vorzugsweise stammt das Abwasser, mit dem das erfindungsgemässe Verfahren durchgeführt wird, jedoch aus dem Nachklärbecken einer Abwasserreinigungsanlage.

Ein weiterer Aspekt der Erfindung betrifft die Verwendung eines Kerzenfilters mit einem auf dessen Manteloberfläche angeordneten Filterschlauch zur Entfernung von Aktivkohle, die organische Spurenstoffe enthält, in einer Abwasserreinigungsanlage. Dabei ist das Material des Filterschlauchs vorzugsweise ausgewählt aus Gruppe von Polypropylen, Polyethylenterephthalat, Polyamid, Baumwolle, Glasfaser, Teflon oder Mischungen davon, wobei Polypropylen und Teflon besonders bevorzugt sind.

Es zeigen:
- Fig. 1: schematisch das erfindungsgemässe Verfahren
- Fig. 2: eine Variante des erfindungsgemässen Verfahrens
- Fig. 3: eine schematische Darstellung einer Filterkerze
- Fig. 4: ein Filterelement enthaltend einen Kerzenfilter

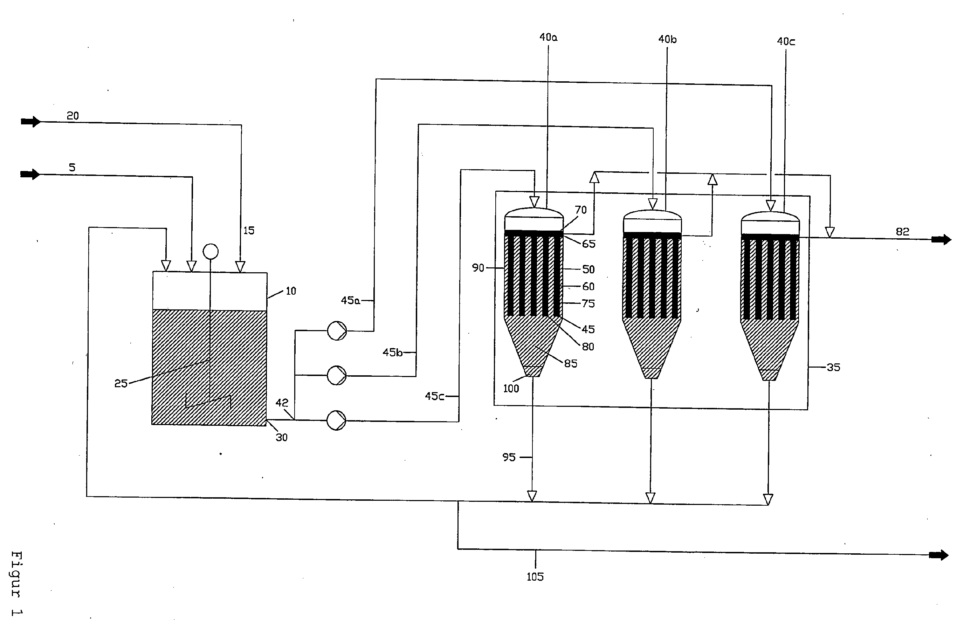

Figur 1 zeigt schematisch das erfindungsgemässe Verfahren. Die mechanische Reinigungsstufe der Kläranlage besteht beispielsweise aus einer Feinrechenanlage, einem belüfteten Sandfang und einer Vorklärung. Die biologische Reinigungsstufe umfasst typischerweise eine Tropfkörperanlage mit nachgeschalteter Denitrifikation und einer Nachklärung sowie einer Simultanfällung zur Phosphorelimination (chemische Reinigungsstufe) (alle nicht gezeigt).

Der Ablauf der Nachklärung wird anschliessend der Aktivkohlen-Adsoptionsanlage zugeführt. Die Aktivkohle-Adsorptionsanlage besteht aus einem Reaktionsbehälter und einer Filtrationseinheit. Typischerweise weist die Aktivkohlen-Adsorptionsanlage einen Zufluss von 100 - 1000 l/s auf.

Das Abwasser 5 wird nach dem Nachklärbecken in einen Reaktionsbehälter 10 geleitet und im Einlauf 15 mit Aktivkohle 20 versetzt. Die Aktivkohle 20 und das Abwasser 5 werden unter ständigem Rühren mit einer Rührvorrichtung 25 miteinander in Kontakt gebracht. Der Reaktionsbehälter 10 weist dabei eine Aktivkohlenkonzentration von 1 bis 20 g / Liter Abwasser, vorzugsweise von 2 bis 10 g / Liter Abwasser auf. Das Abwasser 5 hat idealerweise eine Verweilzeit von 10 bis 20 Minuten in dem Reaktionsbehälter 10, um eine möglichst hohe Adsoptionsrate der organischen Spurenstoffe an die Aktivkohle zu erreichen. Anschliessend wird das die Aktivkohle enthaltende Abwasser über den Ausfluss 30 dem Reaktionsbehälter 10 entnommen und in die Filtrationseinheit 35 gepumpt. Je nach Grösse der Abwasserreinigungsanlage weist die Filtrationseinheit 35 ein oder mehrere Filtrationselemente 40 (40a, 40b, 40c) auf. Sofern die Filtrationseinheit 35 mehrere Filtrationselemente 40 aufweist, kann der die Aktivkohle enthaltende Abwasserstrom durch entsprechende Pumpen in die entsprechende Anzahl Teilströme 45 (45a, 45b, 45c) aufgeteilt werden.

Das Abwasser wird darauf in die Filtrationselemente 40 gepumpt. Das Filtrationselement 40 weist wenigstens einen rohrförmigen, wasserdurchlässigen Trägerkörper 50 auf, auf dessen Mantelfläche ein Filterschlauch 60 angeordnet ist. In der gezeigten Ausführungsform ist der rohrförmige, wasserdurchlässige Trägerkörper 50 am fussseitigen Ende 45 geschlossen. Der rohrförmige Trägerkörper 50 ist auf dem dem fussseitigen Ende 45 gegenüberliegenden Ende 65 mit einem Wassersammler 70 (beispielsweise in Form eines Registerrohrs), vorzugsweise über einen Anschlussstutzen (nicht gezeigt), strömungsverbunden. Das gesamte Abwasser wird nun filtriert, wobei die Aktivkohle auf dem Filterschlauch 60 einen Filterkuchen 75 bildet, der die eigentliche Filtration des Abwassers bewirkt. Das Abwasser durchdringt dabei den Filterkuchen 75 und den Filterschlauch 60 von aussen nach innen und durchströmt anschliessend den Innenraum 80 des rohrförmigen Trägerkörpers 50 und wird als gereinigtes Abwasser 82 über den Wassersammler 70 aus dem Filtrationselement 40 ausgetragen.

Nach einer gewissen Filtrationszeit wird der Abwasserzufluss unterbrochen und der auf dem Filterschlauch 60 gebildete Filterkuchen 75 wird von dem Innenraum 80 des rohrförmigen Trägerkörpers 50 mit Luft oder Wasser abgesprengt. Die Luft oder das Wasser werden dabei über den Wassersammler 70 in den Innenraum 80 geleitet. Der abgesprengte Filterkuchen 75 sedimentiert im sich konisch verjüngenden Gehäuseabschnitt 85 des Filtergehäuses 90. Der Aktivkohleschlamm 95 wird beim Auslass 100 aus dem Filtergehäuse 90 ausgetragen und wieder dem Reaktionsbehälter 5 zugeführt. Nach einigen Filtrationszyklen wird der Aktivkohleschlamm 95 in die biologische Stufe 105 der Kläranlage geleitet und mit dem Klärschlamm entsorgt.

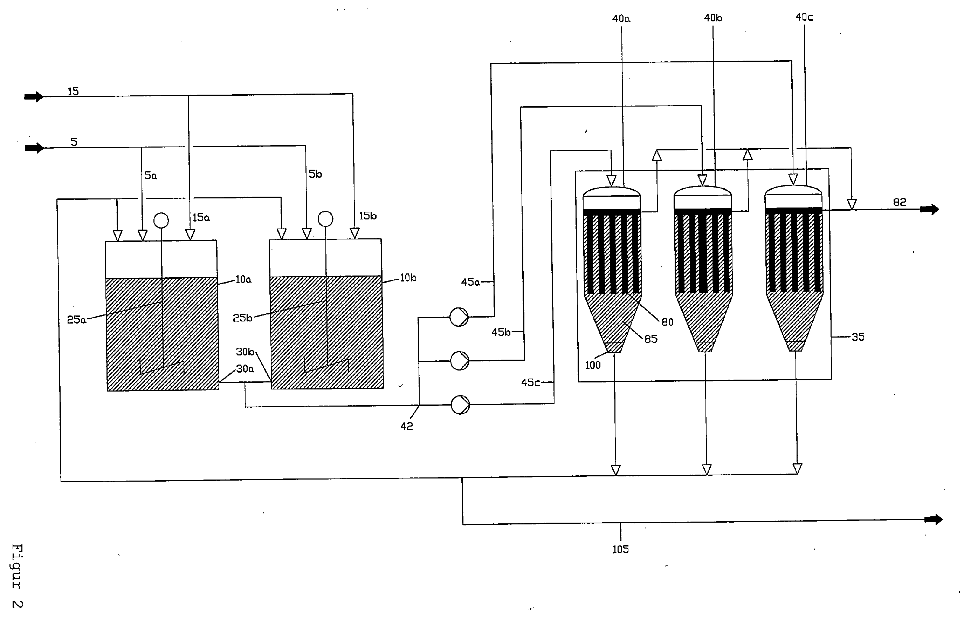

Figur 2 unterscheidet sich von Figur 1 dadurch, dass zwei Reaktionsbehälter 5 (5a, 5b) betrieben werden. Dadurch kann aus dem ersten Reaktionsbehälter 5a das die Aktivkohle enthaltende Wasser entnommen werden und in die Filtrationseinheit überführt werden, während im Reaktionsbehälter 5b die Aktivkohle und das Abwasser durch Rühren optimal durchmischt werden. Nachdem der erste Reaktionsbehälter 5a entleert wird, wird dieser wieder mit neuem Abwasser und Aktivkohle gefüllt, und während im Reaktionsbehälter 5a das Abwasser und die Aktivkohle gemischt werden, wird Reaktionsbehälter 5b entleert und das die Aktivkohle enthaltende Wasser filtriert. Dabei können die durch die Verweilzeit entstehenden Wartezeiten entsprechend verkürzt werden.

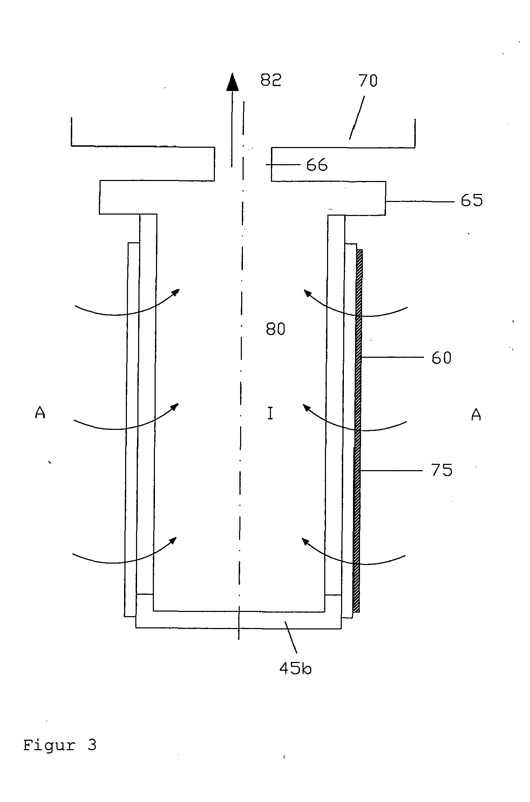

Figur 3 zeigt schematisch einen rohrförmigen Trägerkörper in Form einer Filterkerze 50a. Die Filterkerze 50a ist im Wesentlichen kreiszylindrisch ausgebildet. An einem Ende, das heisst, am Filterkerzenfuss 45b ist die Filterkerze geschlossen. Der Filterkerzenfuss 45b ist in der hier gezeigten Form wasserundurchlässig. Der rohrförmige, an einem Ende geschlossene Trägerkörper 50 ist auf dem dem geschlossenen Ende 45 gegenüberliegenden Ende 65b mit einem Wassersammler 70, vorzugsweise über einen Anschlussstutzen 66, strömungsverbunden. Auf der Mantelfläche der Filterkerze 50a ist ein ebenfalls zylinderförmiger Filterschlauch 60 angeordnet, der vorzugsweise aus Polypropylen, Polyethylenterephthalat, Polyamid, Baumwolle, Glasfaser, Teflon oder Mischungen davon besteht. Der Filterschlauch ist wasserdurchlässig. Das gesamte Abwasser wird nun filtriert, wobei die Aktivkohle auf dem Filterschlauch 60 einen Filterkuchen 75 bildet, der die eigentliche Filtration des Abwassers bewirkt. Das Abwasser durchdringt dabei den Filterkuchen 75 und den Filterschlauch 60 von aussen A nach innen I und durchströmt anschliessend den Innenraum 80 des rohrförmigen Trägerkörper 50 und wird als gereinigtes Abwasser 82 über das Registerrohr 70 aus dem Filtrationselement ausgetragen.

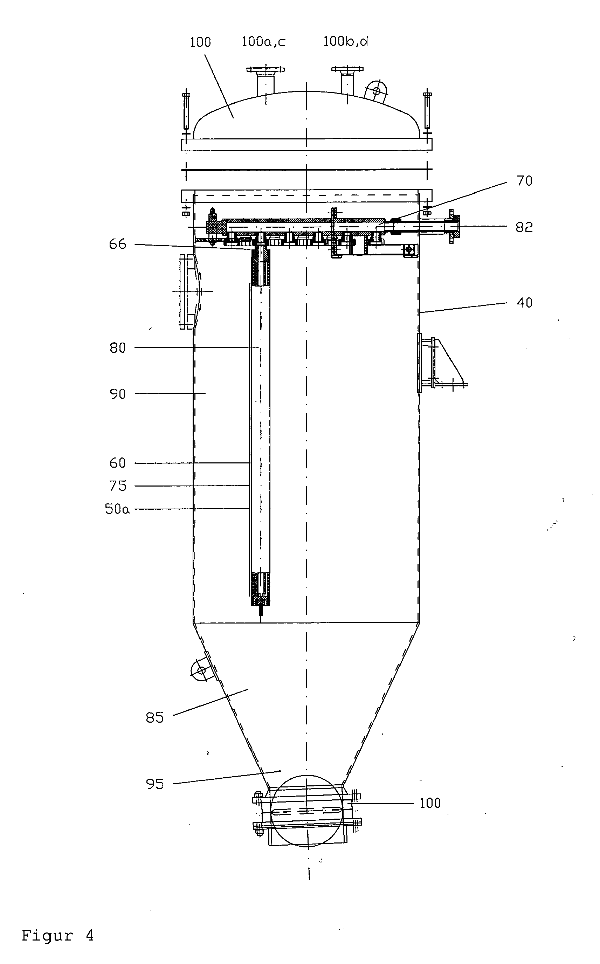

Die Figur 4 zeigt eine Ausführung eines Filtrationselements 40 wie es im erfindungsgemässen Verfahren verwendet wird. Das Filtrationselement 40 besteht aus einem kreiszylinderförmigen, hohlen Filtergehäuse 90. Das Filtergehäuse 90 weist Richtung Auslass 100 einen sich konisch verjüngenden Gehäuseabschnitt 85 auf. Das Filtergehäuse 90 kann auf der Gehäuseabschnitt 85 gegenüberliegenden Seite mit einem Deckel 86 verschlossen werden. Der Deckel 86 wird vorzugsweise mittels Verschrauben mit dem Filtergehäuse 90 verbunden. Der Deckel 86 ist mit verschiedenen Öffnungen 110 (110a, 110b, 110c und 110d) versehen. Eine Vielzahl von Filterkerzen 50a sind am unteren Teil eines Wassersammlers 70 angeordnet. In einer bevorzugten Ausführungsform werden die Filterkerzen 50a über einen Anschlussstutzen 66 mit dem Registerrohr 70 verbunden. Die Filterkerze 50a kann beispielsweise eine in Figur 3 beschriebene Filterkerze sein. In dieser Abbildung ist der Übersichtlichkeit halber nur eine Filterkerze gezeigt.

Das zu filtrierende Abwasser, das durch die Öffnungen 100a, 100b, 100c, 100d in das Filtergehäuse 90 eingeführt wird, durchströmt die Filterkerzen in radialer Richtung durch das Filtergewebe des Filterschlauchs 85 von aussen nach innen und durch den Innenraum 80 der Filterkerze 50b und wird als gereinigtes Abwasser 82 über das Registerrohr 70 aus dem Filtrationselement ausgetragen.

Nach einer gewissen Filtrationszeit wird der Abwasserzufluss 100 unterbrochen und der auf dem Filterschlauch 60 gebildete Filterkuchen 75 wird von dem Innenraum 80 des rohrförmigen Trägerkörpers 50 mit Luft oder reinem Wasser abgesprengt. Die Luft oder das reine Wasser werden dabei über das Registerrohr 70 in den Innenraum 80 geleitet. Der abgesprengte Filterkuchen 75 sedimentiert im sich konisch verjüngenden Gehäuseabschnitt 85 des Filtergehäuses 90. Der Aktivkohleschlamm 95 wird beim Auslass 100 aus dem Filtergehäuse 90 ausgetragen und entweder dem Reaktionsbehälter oder der biologischen Stufe der Kläranlage zugeführt.

## Patentansprüche

1. Verfahren zur Reinigung von mit organischen Spurenstoffen verunreinigtem Abwasser, in dem
a.das Abwasser in einem Reaktionsbehälter mit Aktivkohle versetzt wird, und anschliessend
b.die Aktivkohle und die organischen Spurenstoffe vom Abwasser entfernt werden,
**dadurch gekennzeichnet, dass**
das Aktivkohle enthaltende Abwasser durch einen rohrförmigen, wasserdurchlässigen Trägerkörper, auf dessen Mantelfläche ein Filterschlauch angeordnet ist, filtriert wird, wobei die Aktivkohle auf dem Filterschlauch einen Filterkuchen bildet, der die Reinigung des Abwassers von den organischen Spurenstoffen bewirkt.

2. Verfahren gemäss Anspruch 1, **dadurch gekennzeichnet, dass** der rohrförmige, wasserdurchlässige Trägerkörper ein Kerzenfilter ist.

3. Verfahren gemäss Anspruch 1 oder 2, **dadurch gekennzeichnet dass** das Material des Filterschlauchs ausgewählt ist aus der Gruppe von Polypropylen, Polyethylenterephthalat, Polyamid, Baumwolle, Glasfaser, Teflon oder Mischungen davon, vorzugsweise aus Polypropylen oder Teflon.

4. Verfahren gemäss einem der vorangehenden Ansprüche, **dadurch gekennzeichnet, dass** die Aktivkohle pulverförmig ist.

5. Verfahren nach Anspruch 4, **dadurch gekennzeichnet, dass** die Aktivkohle eine durchschnittliche Partikelgrösse von 1 bis 500 µm, besonders bevorzugt von 45 µm, und eine spezifische Oberfläche von 5 bis 1 '600 m²/g, besonders bevorzugt von grösser als 1000 m²/g aufweist.

6. Verfahren gemäss einem der vorangehenden Ansprüche, **dadurch gekennzeichnet, dass** das Abwasser in dem Reaktionsbehälter eine Verweilzeit von 5 bis 30 Minuten, vorzugsweise 10 bis 20 Minuten hat.

7. Verfahren gemäss einem der vorangehenden Ansprüche, **dadurch gekennzeichnet, dass** der Reaktionsbehälter eine Aktivkohlekonzentration von 1 bis 20 g / Liter Abwasser, vorzugsweise 2 bis 10 g / Liter Abwasser aufweist.

8. Verfahren gemäss einem der vorangehenden Ansprüche, **dadurch gekennzeichnet, dass** das Verfahren kontinuierlich durchgeführt wird.

9. Verfahren nach einem der Ansprüche 1 bis 7, **dadurch gekennzeichnet, dass** das Verfahren chargenweise durchgeführt wird.

10. Verfahren nach Anspruch 8 oder 9, **dadurch gekennzeichnet, dass** zwei bis vier, vorzugsweise zwei Reaktionsbehälter vorgesehen sind.

11. Verfahren gemäss einem der vorangehenden Ansprüche, **dadurch gekennzeichnet, dass** der Filterkuchen vom Filterschlauch mittels Wasser oder mittels Luft, vorzugsweise mittels Luft, entfernt wird.

12. Verfahren gemäss Anspruch 11, **dadurch gekennzeichnet, dass** der vom Filterschlauch entfernte Filterkuchen aufgeschlämmt wird, und anschliessend wieder dem Reaktionsbehälter zugeführt wird.

13. Verfahren gemäss einem der vorangehenden Ansprüche, **dadurch gekennzeichnet, dass** das Abwasser aus dem Nachklärbecken einer Abwasserreinigungsanlage stammt.

14. Verwendung eines Kerzenfilters mit einem Filterschlauch zur Entfernung von Aktivkohle, die organische Spurenstoffe enthält, in einer Abwasserreinigungsanlage.

15. Verwendung nach Anspruch 14, wobei das Material des Filterschlauchs ausgewählt ist aus der Gruppe von Polypropylen, Polyethylenterephthalat, Polyamid, Baumwolle, Glasfaser, Teflon oder Mischungen davon, vorzugsweise aus Polypropylen oder Teflon.
